# EUROPÄISCHE PATENTSCHRIFT

(11) **EP 3 386 680 B1**
(45) Veröffentlichungstag und Bekanntmachung des Hinweises auf die Patenterteilung: **25.08.2021**
(21) Anmeldenummer: 16809368.0
(22) Anmeldetag: 08.12.2016
(51) Int. Cl.: B24B 53/00, B23H 1/00, B24D 5/00, B23H 7/02, B23H 9/08

(54) **STROMÜBERTRAGUNG FÜR DAS ELEKTROEROSIVE ABRICHTEN**
POWER TRANSMISSION FOR ELECTROEROSIVE DRESSING
TRANSMISSION DE PUISSANCE POUR L'AJUSTEMENT PAR ÉLECTROÉROSION

(30) Priorität: 08.12.2015 DE 102015121316
(43) Veröffentlichungstag der Anmeldung: 17.10.2018
(73) Patentinhaber: Fritz Studer AG, 3612 Steffisburg (CH)
(72) Erfinder: KLOTZ, Michael, 3612 Steffisburg (CH)
(74) Vertreter: Witte, Weller & Partner Patentanwälte mbB
(86) Internationale Anmeldenummer: PCT/EP2016/080288
(87) Internationale Veröffentlichungsnummer: WO 2017/097916

(56) Entgegenhaltungen:
- EP-A1- 2 607 006
- US-A- 2 764 543

## Beschreibung

Die vorliegende Erfindung betrifft ein Werkzeug zur zerspanenden Bearbeitung eines Werkstücks. Die vorliegende Erfindung betrifft weiterhin eine Werkzeugmaschine zur zerspanenden Bearbeitung eines Werkstücks.

Werkzeugmaschinen zur zerspanenden Bearbeitung eines Werkstücks werden für die Fertigung von Werkstücken eingesetzt. Zerspanen oder Spanen bezeichnet hierbei die mechanische Abtragung von überflüssigem Material. Die bekanntesten und wichtigsten Bearbeitungsverfahren sind in diesem Zusammenhang Drehen, Fräsen, Bohren, Sägen und Schleifen. Die hierbei eingesetzten Werkzeuge weisen zumeist einen bei der Bearbeitung des Werkstücks rotierenden Grundkörper sowie eine Werkzeugfläche, durch die der eigentliche Materialabtrag am Werkstück erreicht wird, auf. Diese Werkzeugfläche steht mit dem Werkstück in Kontakt und trägt überflüssiges Material ab bzw. bewirkt den Materialabtrag. Hierbei kommt es jedoch auch immer zu einem Materialabtrag an der Werkzeugfläche des Werkzeugs. Um langfristig eine genaue Bearbeitung des Werkstücks sicherzustellen wird bei Werkzeugen mit geometrisch unbestimmter Schneide daher das Werkzeug bzw. die Werkzeugfläche in regelmäßigen Abständen abgerichtet.

Im Falle einer Schleifmaschine als Werkzeugmaschine bzw. einer Schleifscheibe als Werkzeug versteht man unter dem Abrichten insbesondere das Profilieren und Schärfen der Schleifscheibe. Durch das Abrichten werden ein präziser Rundlauf und eine präzise geometrische Form der Schleifscheibe erreicht. Zudem können Verunreinigungen entfernt und die Schleifscheibe geschärft werden. Auch andere Werkzeuge können entsprechend abgerichtet werden.

Das Abrichten erfolgt herkömmlicherweise mechanisch, beispielsweise mittels eines Abrichtwerkzeugs aus Diamant oder einem anderen harten Material. Da das Abrichten zumeist in regelmäßigen Intervallen erfolgt, umfassen verschiedene Werkzeugmaschinen, insbesondere Schleifmaschinen, oft eine entsprechende Abrichtvorrichtung, die in die Werkzeugmaschine integriert ist.

Ein Verfahren für die Abrichtung oder Profilierung elektrisch leitfähiger Werkzeuge, beispielsweise metall- oder keramisch gebundener Schleifscheiben, insbesondere metallgebundener superabrasiver Schleifscheiben, ist die Drahterosion (wire electric discharge dressing, WEDD). Die Schleifscheiben bestehen dabei aus einem Superabrasivkorn, beispielsweise Diamant oder cBN, das in eine elektrisch leitfähige Bindung, beispielsweise in eine metallische Bindung auf Bronzebasis mit zusätzlichen Bestandteilen, beispielsweise Eisen oder Kobalt, eingebettet ist. Solche Bindematerialien haben ausgezeichnete, für einen Schleifprozess wesentliche Eigenschaften, insbesondere in Bezug auf Formstabilität, Kornhaltevermögen, Temperaturbeständigkeit und Wärmeleitfähigkeit. Metallbindungen der Superabrasivschleifscheiben sind grundsätzlich elektrisch leitfähig und können somit erodiert werden. Hierbei wird das nichtleitende Korn nicht direkt abgetragen.

Das Drahterodieren (wire electric discharge machining, WEDM) basiert auf dem Prinzip der funkenerosiven Abtragung zur Formgebung von Werkstücken. Durch elektrische Spannungspulse werden Funken zwischen einem Werkstück (Anode) und einem durchlaufenden dünnen Draht (Katode) erzeugt. Durch diese Funken wird Material vom Werkstück in das trennende Medium, das Dielektrikum, übertragen. Der Draht wird anschließend entsorgt. Die Genauigkeit des Verfahrens beruht darauf, dass der Funke stets an der Stelle überspringt, an der der Abstand zwischen Werkstück und Draht minimal ist. Der Draht (Drahtelektrode, Erodierdraht) wird mittels einer Drahtführung entlang einer gewünschten Kontur geführt.

Dieses Prinzip kann demnach für das Abrichten bzw. für das Profilieren eines Werkzeugs eingesetzt werden. Im Fall einer Schleifmaschine bzw. einer abzurichtenden Schleifscheibe oder einem anderen rotierenden Werkzeug spricht man von rotativem Drahterodieren bzw. von funkenerosivem Drehen. Bei dieser Verfahrensvariante wird von einem zu erodierenden Werkstück ausgegangen, das sich während der Bearbeitung mit bis zu mehreren tausend Umdrehungen pro Minute dreht. Die Drahtelektrode verläuft dabei üblicherweise vertikal, senkrecht zur Rotationsachse. Während der Drehung kann durch die Drahtelektrode eine Kontur in das Werkstück eingebracht werden. Demnach wird das eigentliche Werkzeug, beispielsweise die Schleifscheibe, der Fräser oder der Bohrer, als Werkstück erosiv während der Rotation bearbeitet. Erforderlich ist daher eine Energieübertragung auf das rotierende Werkzeug, damit eine Funktion als Anode ermöglicht wird.

In EP 2 607 006 A1 ist eine Vorrichtung zum rotativen Drahterodieren eines Werkstücks offenbart. Insbesondere wird eine schwenkbare Drahtführung beschrieben, durch die eine relative Winkellage zwischen Drahtführung und Werkstück um eine Achse parallel zur Drahtlaufrichtung am Arbeitspunkt einstellbar ist. Die Energieübertragung auf das rotierende Werkstück, die Schleifscheibe, wird durch eine Stromzuführung in Form eines Schleifbürstenkontakts, eines Schleifkohlekontakts oder als schleifende teilweise umschlingende Litze oder Band ausgestaltet.

Eine aus der US 2 764 543 A, die die Basis für den Oberbegriff des Anspruchs 1 bildet, bekannte Vorrichtung beschreibt eine Kombination aus einem Rahmen, der eine drehbare Spindel aufweist, die eine drehbare Schleifscheibe trägt, wobei die Schleifscheibe eine Arbeitsfläche aufweist, die die ausgerichteten leitenden Flächen einer Vielzahl von leitenden Ringen aufweist, die relativ nahe beieinander angeordnet und voneinander isoliert sind; einem Werkstückhalter, -Mittel, der/das mit dem Rahmen verbunden ist, um den Halter zu befestigen, um ein Werkstück in einer wirksame Beziehung mit der Arbeitsfläche der Schleifscheibe zu halten, um mit den ausgerichteten Flächen der leitenden Ringe zusammenzuwirken; Mittel zum Zuführen von flüssigem Elektrolyt zu dem und zwischen das Werkstück und den ausgerichteten leitenden Flächen der Ringe; einer Vielzahl von Schleifringen, einen für jeden der leitenden Ringe und in entsprechender elektrischer Verbindung damit, mit Mitteln, die die Schleifringe isolierend koaxial zu der Spindel zur Drehung mit dieser unterstützen, Gleichstromversorgungsmitteln mit einer Vielzahl von Steuer- und Versorgungsschaltkreisen, wobei jeweils einer für jeden der leitenden Ringe ist, wobei alle Schaltkreise davon positive Seiten elektrisch mit dem Werkstückhalter verbinden, wodurch letzterer und das Werkstück für die Schaltkreise elektrisch bekannt sind, und davon negative Seiten in jeweils elektrischer Verbindung mit der Vielzahl von Schleifringen halten, wodurch Gleichstrom zur elektrolytischen Zersetzung der Fläche des Werkstücks, die der leitenden Ringfläche des Stromflusses von dem Werkstück zu jedem der leitenden Ringe zugewandt ist, entsteht; und Steuermitteln, die mit jedem der Schaltkreise verbunden sind, um einen maximalen Stromfluss in jedem der Schaltkreise auf einen Wert zu begrenzen, der nicht größer als der kritische Lichtbogenstrom zwischen dem Werkstück und der Ringfläche ist.

Es müssen starke, kurze Erosions-Elektropulse in das schnell rotierende Werkzeug übertragen werden. Wenn beispielsweise eine oder mehrere Drahtbürsten mit hochfestem Draht an die Stirnfläche einer Schleifscheibe oder an eine andere umlaufende Fläche eines rotierenden Werkzeugs gedrückt werden, resultiert dies darin, dass, insbesondere bei hohen Umfangsgeschwindigkeiten, eine hohe Belastung des Werkzeuggrundkörpers erzeugt wird. Im Bereich der Schleifscheiben als Werkzeuge werden zumeist Stahlgrundkörper mit einem gesinterten metallgebundenen Schleifbelag verwendet. Diese Stahlgrundkörper haben jedoch insbesondere mit steigender Breite und mit steigendem Durchmesser das Problem, dass eine relativ hohe Energie für das Beschleunigen und Abbremsen erforderlich ist, dass der händische Transport aufgrund des hohen Gewichts stark erschwert ist, dass nur eine geringe Dämpfung erreicht werden kann und dass diese bei hohen Umfangsgeschwindigkeiten (beispielsweise größer 140 m/sec) nicht mehr sinnvoll einsetzbar sind. Demnach ist ein elektroerosives Abrichten nicht in allen Anwendungsbereichen möglich.

Der vorliegenden Erfindung liegt die Aufgabe zugrunde, ein elektroerosives Abrichten eines Werkzeugs auch in Anwendungen zu ermöglichen, in denen hohe Rotationsgeschwindigkeiten des Werkzeugs erforderlich sind und in denen das Gewicht des Werkzeugs eine händische Manipulation erschweren oder die Werkzeugaufnahme überlasten würde.

Gemäß einem Aspekt der vorliegenden Erfindung wird dieses Problem durch ein Werkzeug zur spanenden Bearbeitung eines Werkstücks gelöst. Das Werkzeug umfasst:
- einen um eine Drehachse rotierbaren Grundkörper aus Carbon oder faserverstärktem Kunststoff;
- eine elektrisch leitfähige Werkzeugfläche zum Materialabtrag am Werkstück; und
- eine Funktionsfläche, die mit der Werkzeugfläche elektrisch verbunden ist, zur elektrischen Kontaktierung der Werkzeugfläche während einer Drehung des Werkzeugs,
wobei die Funktionsfläche bezüglich der Drehachse axial auf einer Stirnseite oder radial auf einem Absatz des Grundkörpers angeordnet ist, wobei die Funktionsfläche als Ring oder Scheibe ausgestaltet ist und Zinken aufweist, die in den Grundkörper eingreifen, und wobei um die Zinken Fasern des faserverstärkten Kunststoffs des Grundkörpers und/oder Metallfasern gewickelt sind und/oder auf den Zinken elektrisch leitender Kleber aufgebracht ist.

Durch die erfindungsgemäßen Maßnahmen kann die elektrische Leitfähigkeit verbessert werden.

Gemäß einem weiteren Aspekt betrifft die vorliegende Erfindung eine Werkzeugmaschine gemäß Anspruch 13 zur zerspanenden Bearbeitung eines Werkstücks mittels eines Werkzeugs wie oben beschrieben

Das erfindungsgemäße Werkzeug kann daher zur zerspanenden Bearbeitung eines Werkstücks mittels einer elektrisch leitfähigen Werkzeugfläche eingesetzt werden. Diese elektrisch leitfähige Werkzeugfläche ist auf einem rotierbaren Grundkörper aufgebracht. Beispielsweise befindet sich die Schleiffläche einer Schleifscheibe radial auf dem Grundkörper bezüglich der Drehachse des Grundkörpers.

Durch die elektrisch leitfähige Werkzeugfläche eignet sich die Werkzeugfläche für eine elektroerosive Bearbeitung zum Abrichten oder zur Profilierung des Werkzeugs bzw. der Werkzeugfläche, während sich das Werkzeug bzw. der Grundkörper um seine Drehachse dreht. Hierin bezeichnet eine elektrisch leitfähige Werkzeugfläche insbesondere eine Werkzeugfläche, bei der ein leitendes Materials als Bindung für Schleifkorn verwendet wird. Zumeist handelt es sich hierbei um eine metallgebundene Werkzeugfläche (metallgebundene Schleifscheibe). Es ist jedoch auch denkbar, dass die Bindung eine leitfähige Keramik (keramisch gebundene Schleifscheibe) oder ein anderes geeignetes leitfähiges Material ist. Solche Keramiken sind bisher als Schleifscheibenbindung nicht im Einsatz, sind jedoch grundsätzlich realisierbar und elektroerosiv bearbeitbar. Beispielsweise ist es möglich, eine gesinterte Bronze mit Legierungszusätzen oder einer Keramik zu verwenden.

Die hierzu erforderliche Stromübertragung in die Werkzeugfläche erfolgt mittels einer Funktionsfläche. Die Funktionsfläche ist ebenfalls auf dem Grundkörper angebracht und elektrisch mit der Werkzeugfläche verbunden. Die Funktionsfläche ist zudem zur elektrischen Kontaktierung der Werkzeugfläche während einer Drehung des Werkzeugs ausgelegt. Beispielsweise steht die Funktionsfläche beim Abrichten oder bei der Profilierung in Kontakt mit einem Bürstenkontakt, einem Schleifkontakt oder einem Rollrad. Durch die Kontaktierung wird eine Übertragung der notwendigen Hochspannungs- und Hochstrompulse ermöglicht.

Erfindungsgemäß ist die Funktionsfläche bezüglich der Drehachse axial auf einer Stirnseite oder radial auf einem Absatz des Grundkörpers angeordnet. Die Funktionsfläche rotiert mit dem Grundkörper. Bei der Rotation schleift die Funktionsfläche beispielweise entlang eines feststehenden Verbindungselements, beispielsweise einer Metallbürste.

Demnach wird im Gegensatz zu bisherigen Werkzeugen nicht direkt ein Kontakt zwischen dem feststehenden Verbindungselement und dem Grundkörper hergestellt, sondern eine Funktionsfläche am Grundkörper kontaktiert. Diese Funktionsfläche entspricht bevorzugt einer separaten Schicht, die die zur Kontaktierung erforderlichen bzw. vorteilhaften Materialeigenschaften aufweist. Insbesondere kann die Funktionsfläche im Vergleich zum Grundkörper widerstandsfähiger ausgelegt sein und sich damit besser zur Kontaktierung mit einem Bürstenkontakt eignen. Die Materialpaarung zwischen dem Material der Bürste und dem Material der Funktionsfläche wird dabei vorzugsweise hinsichtlich des elektrochemischen Verschleißes passend ausgewählt, sodass die Erosion hauptsächlich an der Bürste und nicht an der Funktionsfläche stattfindet. Durch die zusätzlich vorgesehene Funktionsfläche am Werkzeug wird bei rotierenden Werkzeugen eine sicherere Energieübertragung und effiziente Abrichtung ermöglicht.

Es wird ermöglicht, dass die Belastung des Grundkörpers beim Abrichten des Werkzeugs verringert wird, da der Grundkörper beim Abrichten durch Drahterosion nicht direkt mit einem Kontakt zur Stromübertragung in Verbindung stehen muss. Der Kontakt wird über die Funktionsfläche hergestellt. Der Grundkörper kann demnach eine geringere Stabilität aufweisen. Hierdurch werden höhere Drehzahlen ermöglicht. Zudem kann ein leichterer Grundkörper verwendet werden, der schneller und energieeffizienter beschleunigt und abgebremst werden kann. Hierdurch kann eine präzisere Bearbeitung ermöglicht werden. Des Weiteren können Kostenvorteile dadurch erreicht werden, dass günstigere Materialien zur Herstellung des Grundkörpers verwendet werden.

Gemäß der Erfindung umfasst der Grundkörper ein Carbon oder einen anderen faserverstärkten Kunststoff. Die Verwendung von faserverstärkten Kunststoffen wie Carbon erlaubt die Herstellung von vergleichsweise leichten Schleifscheiben oder anderen Werkzeugen, die trotzdem eine hohe Stabilität und hohe Dämpfung aufweisen. Vergleichbar dazu erlaubt die Verwendung von Aluminium ebenfalls die Herstellung von Schleifscheiben oder anderen Werkzeugen, die stabil und trotzdem leicht sind. Leichte Werkzeuge erlauben höhere Rotationsgeschwindigkeiten, können energieeffizient betrieben und einfacher händisch manipuliert werden.

Sowohl nichtleitende Materialien als auch Materialien mit einer vergleichsweise geringen mechanischen und/oder chemischen Widerstandsfähigkeit, insbesondere mit einer Widerstandsfähigkeit, die geringer als die Widerstandsfähigkeit von Stahl ist, eignen sich üblicherweise nicht für die Kontaktierung mit einem Bürstenkontakt. Der Bürstenkontakt kann, insbesondere bei hohen Umlaufgeschwindigkeiten, das Material des Grundkörpers beschädigen, so dass die Lebensdauer des Grundkörpers und damit des Werkzeugs vermindert wird. Demnach kann Energie nicht direkt an den rotierenden Grundkörper übertragen werden.

Durch die erfindungsgemäße Funktionsfläche wird die Verwendung von nichtleitenden Materialien und/oder Materialien mit einer geringeren mechanischen Widerstandsfähigkeit im Grundkörper ermöglicht. Wie bereits zuvor beschrieben, können hierdurch Vorteile bezüglich der Kosten, der Steuerbarkeit (beispielsweise beim Beschleunigen und Abbremsen des Werkzeugs) und der Handhabung erreicht werden. Insbesondere werden durch die erfindungsgemäße Funktionsfläche Werkzeuge aus leichtem Material ermöglicht, die sich für höhere Umlaufgeschwindigkeiten eignen.

In einer Ausgestaltung des Werkzeugs umfasst die Funktionsfläche ein widerstandsfähiges Material zur elektrischen Kontaktierung mit einem Bürstenkontakt bei geringem Verschleiß, und ist die Funktionsfläche zur Hochfrequenz- Hochstromübertragung für die elektroabrasive Materialbearbeitung, insbesondere zur Übertragung von elektrischen Pulsen ist mit einer Frequenz bis zu 250 KHz und einer Stromstärke bis zu 450 A, ausgebildet. Die Funktionsfläche umfasst demnach ein elektrisch leitfähiges Material, welches eine hohe mechanische und/oder chemische Widerstandsfähigkeit aufweist. Demnach kann die Funktionsfläche mit einem Bürstenkontakt auch bei hohen Rotationsgeschwindigkeiten des Werkzeugs kontaktiert werden, ohne dass es zu einer schnellen Abnutzung kommt.

Die Funktionsfläche ist zur elektroerosiven bzw. elektroabrasiven Materialbearbeitung ausgelegt. Diese Auslegung umfasst insbesondere eine entsprechende Dimensionierung beispielsweise in Bezug auf die Breite und Länge der Funktionsfläche sowie eine entsprechende Leitfähigkeit, die eine Übertragung von elektrischen Pulsen mit einer Frequenz bis zu 250 KHz und einer Stromstärke bis zu 450 A erlaubt. Durch solche Strompulse kann die elektrisch leitfähige Werkzeugfläche erosiv bearbeitet werden. Durch die Strompulse wird das Bindematerial in der Werkzeugfläche gelöst. Nur das eigentliche Schneidmaterial, beispielsweise Diamantkorn, bleibt zurück.

In einer weiteren Ausgestaltung ist zusätzlich ein mit dem Grundkörper verbundenes Kontaktelement vorgesehen, wobei eine Oberfläche des Kontaktelements als Funktionsfläche ausgebildet ist. Die Funktionsfläche kann einerseits direkt mit dem Grundkörper in verbunden sein und andererseits mit dem Kontaktelement verbunden sein. Ein Kontaktelement erlaubt dabei eine bessere Verbindung der Funktionsfläche mit dem Grundkörper. Beispielsweise kann eine Oberfläche des Kontaktelements direkt als Funktionsfläche ausgeführt sein. Hierdurch können beispielsweise die Herstellungskosten reduziert und/oder die Stabilität gesteigert werden. Durch die Verwendung eines zusätzlichen Kontaktelements kann die erforderliche Stabilität bzw. mechanische Widerstandsfähigkeit des Grundkörpers weiter verringert werden, da die Kraft des Kontakts nicht direkt auf den Grundkörper sondern zunächst auf die Kontaktfläche wirkt und der Verschleiß durch Reibung (Abrasionswirkung) minimiert wird. Demnach können die oben dargestellten vorteilhaften Effekte bzgl. der Herstellungskosten und des Gewichts weiter verstärkt werden.

In einer vorteilhaften Ausgestaltung ist das Kontaktelement als Einlegeteil zum Einlegen in eine Aussparung im Grundkörper ausgebildet. Durch die Ausführung des Kontaktelements als Einlegeteil in eine entsprechende Aussparung im Grundkörper kann eine einfache und stabile bzw. widerstandsfähige Verbindung mit dem Grundkörper erreicht werden. Eine Aussparung im Grundkörper beschreibt hierbei insbesondere eine Ausnehmung im Grundkörper, in die ein formschlüssiges Einlegeteil als Kontaktelement eingepasst werden kann. Demnach wirkt die Kraft des Kontaktes für die elektrische Verbindung auf das Einlegeteil und nicht direkt auf den Grundkörper. Hierdurch kann die auf den Grundkörper wirkende Kraft reduziert und der Reibungsverschleiß wird minimiert werden. Trotzdem kann die ursprüngliche Form des Grundkörpers im Wesentlichen beibehalten werden.

In einer weiteren Ausgestaltung ist das Kontaktelement als Stahlblech, insbesondere als kreis- oder ringförmiges Stahlblech ausgebildet, und/oder mit dem Grundkörper durch eine Schraub-, Klebe- oder Schweißverbindung verbunden. Es hat sich als vorteilhaft herausgestellt, das Kontaktelement als Stahlblech auszuführen. Im Falle einer Schleifscheibe als Werkzeug, kann beispielsweise ein Stahlblech auf einer axialen Stirnseite angebracht sein. Dieses Stahlblech kann insbesondere kreis- oder ringförmig ausgebildet sein. Beim Rotieren der Schleifscheibe kann der Bürstenkontakt direkt auf das Stahlblech wirken. Der Grundkörper wird nicht belastet. Demnach kann für den Grundkörper auch ein weniger widerstandsfähiges oder elektrisch nichtleitendes Material verwendet werden. Das Kontaktelement ist mit dem Grundkörper bevorzugt durch eine Schraub-, Klebe- oder Schweißverbindung verbunden. Durch diese Verbindung wird erreicht, dass eine stabile Verbindung zwischen Kontaktelement und Werkzeug bzw. Grundkörper zustande kommt. Zudem kann die Funktionsfläche auch austauschbar eingebracht werden.

Die um die Zinken gewickelten Fasern des faserverstärkten Kunststoffs des Grundkörpers können auch durch den Grundkörper führen und mit der Werkzeugfläche elektrisch verbinden, insbesondere die Werkzeugfläche kontaktieren, um so auf einfache Weise die elektrische Verbindung zur Werkzeugfläche herzustellen. Ferner kann eine Metallisierungsschicht zwischen der Werkzeugfläche und dem Grundkörper vorgesehen sein.

In einer bevorzugten Ausführungsform ist die Funktionsfläche als Beschichtung mit einem verschleißfesten Material, insbesondere mit Hartchrom, Hartgold, Titanaluminiumnitrid, TiAIN, Chromnitrid, CrN oder leitfähig eingestelltem Diamond Like Carbon, DLC, ausgeführt. Die Beschichtung kann einerseits auf dem Grundkörper und andererseits auf dem Kontaktelement aufgebracht sein. Durch die Beschichtung mit einem verschleißfesten Material wird erreicht, dass der für einen längeren Betrieb erforderliche geringe mechanische Verschleiß sichergestellt ist. Die harte, verschleißfeste Beschichtung erlaubt es, dass eine Kontaktierung mittels eines Bürstenkontakts erfolgen kann, ohne dass der Grundkörper, insbesondere bei hohen Drehgeschwindigkeiten, beschädigt bzw. schnell abgenutzt wird. Die Beschichtung kann je nach Material des Grundkörpers durch verschiedene Verfahren erfolgen. Verschleißfest bedeutet in diesem Zusammenhang insbesondere, dass eine hohe mechanische und elektrochemische Widerstandsfähigkeit gegeben ist. Insbesondere bezüglich eines mechanischen Kontakts mit einer Schleifbürste und in Bezug auf eine elektrochemische Reaktion zwischen Bürste und Funktionsfläche oder einem Schmier- oder Spülmittel. Durch eine Beschichtung wird erreicht, dass nur ein geringes Zusatzgewicht durch die Funktionsfläche bedingt ist. Die Beschichtung kann sehr dünn ausgeführt werden. Die Beschichtung stellt eine Art Schutz des Grundkörpers oder des Kontaktelements dar. Üblicherweise ist die Beschichtung elektrisch leitfähig. Die Beschichtung entspricht einer dünnen Materialschicht.

In einer weiteren bevorzugten Ausführungsform ist die Funktionsfläche bezüglich der Drehachse axial auf zwei Stirnseiten des Grundkörpers angeordnet. Durch eine beidseitig axiale Anordnung der Funktionsfläche kann erreicht werden, dass auch bei höheren Geschwindigkeiten ein symmetrischer Aufbau und eine symmetrische Gewichtsverteilung bezüglich der Rotationsachse einen ungleichmäßigen geometrischen Verzug aufgrund von Rotationskräften verhindern und durch die symmetrische (beidseitige) Einleitung der Reibungswärme über die Funktionsflächen keine ungleichmäßige thermische Ausdehnung erzeugt wird. Eine solche thermische Ausdehnung könnte zu einem Verzug des Werkzeugs und somit zu einer Ungenauigkeit beim Bearbeiten von Werkstücken führen. Durch eine beidseitige Anordnung der Funktionsfläche auf gegenüberliegenden Stirnflächen wird dies vermieden.

In einer vorteilhaften Ausgestaltung weist die Funktionsfläche eine Ebenheit von maximal 0.02 mm auf, und/oder ist die Funktionsfläche als Ring ausgeführt. Durch eine möglichst glatte bzw. ebene Funktionsfläche wird eine geringe Reibung zwischen einem Bürsten-oder anderem Kontakt erreicht. Die Bürstendrähte können zum Nachgehen der Unebenheit mit reduzierter Kraft auf die Funktionsfläche gedrückt werden. Hierdurch wird die entstehende Wärme durch Reibung minimiert. Die Belastung der Funktionsfläche und des Kontakts wird minimiert. Hierdurch wird die Lebensdauer aller Komponenten erhöht. Durch eine Ausführung der Funktionsfläche als Ring wird erreicht, dass eine Kontaktierung während des kompletten Umlaufs des Werkzeugs sichergestellt ist. Hierbei ist die Funktionsfläche trotzdem so klein wie möglich, wodurch zum einen eine Gewichtsreduktion und zum anderen, durch ein gegebenenfalls relativ teures Material der Funktionsfläche, eine Minimierung der Kosten erreicht werden kann.

In einer bevorzugten Ausführungsform sind die Funktionsfläche und die Werkzeugfläche durch einen elektrischen Leiter verbunden. Für die elektrische Kontaktierung der Werkzeugfläche, so dass diese durch einen Erodiervorgang bearbeitet werden kann, ist es erforderlich, dass die Funktionsfläche, durch die die Strompulse eingeleitet werden, mit der Werkzeugfläche elektrisch verbunden ist. Diese Kontaktierung kann vorzugsweise durch einen Leiter, beispielsweise einen Draht, erreicht werden. Dieser elektrische Leiter kann beispielsweise durch den Grundkörper oder an der Oberfläche des Grundkörpers entlang verlaufen. Durch den Leiter wird erreicht, dass die Funktionsfläche nicht in direktem Kontakt mit der Werkzeugfläche stehen muss. Hierdurch werden verschiedene Geometrien und Variationen bezgl. der Anordnung der Funktionsfläche ermöglicht. Je nach Anordnung einer entsprechenden Werkzeugmaschine bzw. einer Erodiervorrichtung in einer Werkzeugmaschine gibt es bezüglich der Anordnung eines Bürsten- oder anderen Kontakts geometrische Erfordernisse. Durch einen Leiter wird erreicht, dass die Funktionsfläche am Werkzeug entsprechend angepasst werden kann. Es wird eine höhere Flexibilität ermöglicht, insbesondere wenn der Grundkörper aus einem elektrisch nichtleitenden Material besteht.

In einer weiteren Ausführungsform umfasst der Grundkörper Carbon und sind die Funktionsfläche und die Werkzeugfläche durch Carbonfasern oder durch leitfähig ausgeführtes Matrixpolymer im Grundkörper elektrisch verbunden. Ein Grundkörper aus Carbon ist besonders leicht und trotzdem stabil. Carbon ist jedoch üblicherweise elektrisch nichtleitend. Demnach kann erfindungsgemäß eine Funktionsfläche zur Stromübertragung in das Werkzeug verwendet werden. Vorteilhafterweise kann die Funktionsfläche durch leitfähige Carbonfasern oder durch leitfähig ausgeführtes Matrixpolymer direkt im Grundkörper elektrisch mit der Werkzeugfläche verbunden sein. Hierdurch wird es vermieden, dass ein spezielles weiteres Element zur Verbindung der Funktionsfläche mit der Werkzeugfläche benötigt wird. Demnach verringern sich die Herstellungskosten und das Gewicht des Werkzeugs.

In einer Ausführungsform ist die Werkzeugfläche als Ring oder in Form mehrerer Segmente ausgeführt und/oder auf den Grundkörper aufgeklebt. Bei einer Schleifmaschine ist die Schleiffläche als Werkzeugfläche üblicherweise auf dem Umfang umlaufend angeordnet. Die Werkzeugfläche kann dabei als Ring ausgeführt sein oder auch in Form mehrerer separater Segmente auf dem Grundkörper ausgeführt sein.

In einer Ausführungsform der erfindungsgemäßen Werkzeugmaschine ist das Verbindungselement als Bürste, insbesondere als Stahl- oder Kupferbürste, zur schleifenden Kontaktierung der Funktionsfläche während des Abrichtens des Werkzeugs ausgeführt. Die Vorrichtung zum Erodieren ist vorzugsweise eine Drahterodiervorrichtung für das rotative Drahterodieren. Die Kontaktierung erfolgt mittels einer Bürste, insbesondere einer Bürste aus Edelstahldraht, Kupferdraht oder aus galvanisch beschichtetem Draht. Das Material der Bürste beziehungsweise die Werkstoffpaarung Bürste/Funktionsfläche wird dabei vorzugsweise in Abhängigkeit vom Material der Funktionsfläche so gewählt, dass der elektrochemische Verschleiß an der Bürste und nicht an der Funktionsfläche entsteht. Es sind jedoch auch andere Kontakte möglich, beispielsweise ein Rollkontakt oder ein anderer Schleifkontakt. Eine Bürste als Verbindungselement kann kosteneffizient und herstellungseffizient ausgeführt sein.

In einer weiteren Ausführungsform umfasst die erfindungsgemäße Werkzeugmaschine eine Spülvorrichtung zum Spülen der Kontaktstelle zwischen der Funktionsfläche des Werkzeugs und dem Verbindungselement der Vorrichtung. Durch die Spülvorrichtung wird eine Beeinträchtigung des Kontakts durch die Umgebungsverunreinigungen, beispielsweise die abgetragenen Späne, vermindert oder verhindert. Die Kontaktierung kann demnach zuverlässiger erfolgen. Durch die Spülvorrichtung wird ein Spülmedium an der Kontaktstelle eingebracht. Ein Spülmedium kann dabei insbesondere Öl sein.

Die vorliegende Erfindung kann besonders vorteilhaft für Schleifmaschinen als Werkzeugmaschinen bzw. für Schleifscheiben als Werkzeuge mit einer Schleiffläche als Werkzeugfläche eingesetzt werden. Eine Schleifscheibe hat üblicherweise einen scheibenförmigen Grundkörper. Eine solche Schleifscheibe wird in einer Schleifmaschine eingesetzt. Es ist jedoch auch eine Übertragung der vorliegenden Erfindung auf andere Werkzeuge zur zerspanenden Bearbeitung eines Werkstücks, wie zu Beispiel Bohrer, Sägen oder Fräser, oder auf andere Werkzeugmaschinen, wie zum Beispiel Bohrmaschinen, Fräsmaschinen oder Sägemaschinen, möglich.

Es versteht sich, dass die vorstehend genannten und die nachstehend noch zu erläuternden Merkmale nicht nur in der jeweils angegebenen Kombination, sondern auch in anderer Kombination oder in Alleinstellung verwendbar sind, ohne den Rahmen der vorliegenden Erfindung zu verlassen.

Die Erfindung wird nachfolgend anhand ausgewählter Ausführungsbeispiele in Zusammenhang mit den beiliegenden Zeichnungen näher beschrieben und erläutert. Es zeigen:
- Fig. 1: eine schematische Darstellung einer erfindungsgemäßen Schleifscheibe zur zerspanenden Bearbeitung eines Werkstücks;
- Fig. 2: eine schematische Darstellung eines Erodiervorgangs zum Abrichten einer Schleifscheibe gemäß der vorliegenden Erfindung;
- Fig. 3: eine schematische Darstellung Vorrichtung zum rotativen Drahterodieren einer Schleifscheibe gemäß einem Aspekt der vorliegenden Erfindung;
- Fig. 4: eine schematische perspektivische Ansicht einer Schleifscheibe zur zerspanenden Bearbeitung eines Werkstücks gemäß einer Ausführungsform der vorliegenden Erfindung
- Fig. 5: eine schematische Darstellung einer ersten Ausführungsform einer erfindungsgemäßen Schleifscheibe;
- Fig. 6: eine schematische Darstellung einer zweiten Ausführungsform einer erfindungsgemäßen Schleifscheibe;
- Fig. 7: eine schematische Darstellung einer dritten Ausführungsform einer erfindungsgemäßen Schleifscheibe;
- Fig. 8: eine schematische Darstellung einer vierten Ausführungsform einer erfindungsgemäßen Schleifscheibe;
- Fig. 9: eine schematische Darstellung einer fünften Ausführungsform einer erfindungsgemäßen Schleifscheibe;
- Fig. 10: eine schematische Darstellung einer sechsten Ausführungsform einer erfindungsgemäßen Schleifscheibe;
- Fig. 11: einen Querschnitt eines Abschnitts der Funktionsfläche bei der sechsten Ausführungsform der Schleifscheibe; und
- Fig. 12: eine perspektivische Ansicht eines Abschnitts der Funktionsfläche bei der sechsten Ausführungsform der Schleifscheibe.

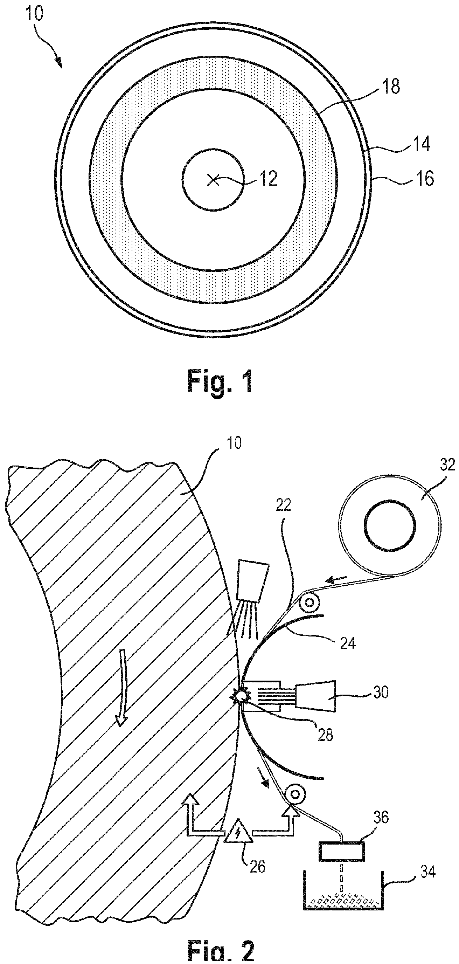

In Fig. 1 ist ein Werkzeug 10 zur zerspanenden Bearbeitung eines Werkstücks dargestellt. Dargestellt ist eine Schleifscheibe 10. Im Folgenden wird die vorliegende Erfindung anhand einer Schleifscheibe beispielhaft dargestellt. Es versteht sich, dass die vorliegende Erfindung auch bei anderen Werkzeugen zur zerspanenden Bearbeitung eines Werkstücks eingesetzt werden kann, beispielsweise bei Fräsern oder Bohrern.

Fig. 1 zeigt eine schematische Draufsicht einer Schleifscheibe 10. Erfindungsgemäß umfasst die Schleifscheibe einen um eine Drehachse 12 rotierenden Grundkörper 14. Der Grundkörper besteht insbesondere aus Carbon oder aus Leichtmetall und ist bevorzugt scheibenförmig oder zumindest im Wesentlichen rotationssymmetrisch bezgl. der Drehachse. Ebenfalls kann die Verwendung der vorliegenden Erfindung bei einem Grundkörper aus Stahl vorteilhaft sein.

Auf den Grundkörper 14 ist entlang seines Umfangs eine Werkzeugfläche 16 als Schleiffläche bzw. Schleifbelag zum Materialabtrag an einem Werkstück vorgesehen. Die Werkzeugfläche ist elektrisch leitfähig, umfasst demnach ein Schleif- oder Werkzeugmaterial, das in eine elektrisch leitfähige Bindung eingebettet ist. Die elektrisch leitfähige Werkzeugfläche kann durch Funkenerosion bearbeitet werden.

Erfindungsgemäß ist weiterhin eine Funktionsfläche 18 vorgesehen, durch die eine elektrische Kontaktierung der Werkzeugfläche 16 während einer Drehung der Schleifscheibe 10 erreicht werden kann. Die Funktionsfläche 18 ist im dargestellten Beispiel bezüglich der Drehachse 12 axial auf einer Stirnseite des Grundkörpers 14 angeordnet. Alternativ dazu ist es auch möglich, dass die Funktionsfläche 18 radial auf einem Absatz des Grundkörpers 14 angeordnet ist.

Fig. 2 zeigt eine schematische Darstellung eines Abrichtverfahrens zum Abrichten von elektrisch leitfähigen Werkzeugen 10. Insbesondere ist ein Abrichtverfahren zum Abrichten einer metallgebundenen Schleifscheibe mit Diamant oder cBN Schleifkorn gezeigt. Bei dem dargestellten Verfahren wird eine Drahtelektrode 22 über ein Führungselement 24 an der Schleifscheibe 10 bzw. dem Werkzeug vorbeigeführt. Zwischen der Schleifscheibe 10 und der Drahtelektrode 22 wird eine elektrische Spannung angelegt, so dass es im dielektrischen Medium (Dielektrikum), bspw. Öl, nach Überwinden einer Zündspannung zu einer Entladung kommen kann. Hierfür ist eine Stromzuführung 26 vorgesehen. Die Schleifscheibe 10 rotiert, wie durch den eingezeichneten Pfeil angedeutet.

Üblicherweise besteht die Werkzeugfläche der Schleifscheibe 10 aus einem Superabrasivkorn, beispielsweise Diamant oder cBN, das in gesinterte Bronze mit verschiedenen Legierungszusätzen, wie Eisen oder Kobalt oder in eine andere elektrisch leitfähige Matrix, bspw. in eine Keramik, eingebettet ist. Zumeist besitzt die Schleifscheibe an der Umfangsfläche einen direkt gesinterten oder geklebten Schleifbelag (Werkzeugfläche) mit Diamanten oder cBN Körnern in elektrisch leitfähiger Bindung. Beim Erodieren der Werkzeugfläche wird nur die elektrisch leitfähige Bindung gelöst und das Korn bleibt bestehen. Hierdurch kann die Schleifscheibe 10 konditioniert, d.h. profiliert und geschärft werden.

Üblicherweise ist zur Spülung und zur Wirkung als Dielektrikum im Wirkbereich 28 der Funkenerosion eine Zuführung 30 eines dielektrischen Spülmediums vorgesehen. Dies kann beispielsweise Öl oder deionisiertes Wasser sein. Im Wirkbereich 28 der Funkenerosion kommt es zu Entladungen im Dielektrikum zwischen Schleifscheibe 10 und Drahtelektrode 22. Aufgrund angelegter Strompulse über die Stromzuführung 26 kommt es zu Funkenerosion und damit zu einem Materialabtrag an der Schleifscheibe 10 bzw. ebenfalls zu einem Materialabtrag an der Drahtelektrode 22. Demnach kann die Schleifscheibe 10 bzw. die Schleiffläche 16 der Schleifscheibe 10 bearbeitet werden.

Da die Drahtelektrode 22 bei der Funkenerosion beschädigt wird, ist es für das funkenerosive Abtragen von Material notwendig, dass die Drahtelektrode 22 ständig erneuert wird und von einem Drahtvorrat 21 über eine Drahtführung 24 zu einem Abfallbehälter 34 für den Drahtabfall laufen kann. Üblicherweise ist ein Drahtabschneider 36 vorgesehen, mit dem die Drahtelektrode 22 periodisch bzw. erforderlichenfalls abgetrennt werden kann, um einen Materialstau zu vermeiden.

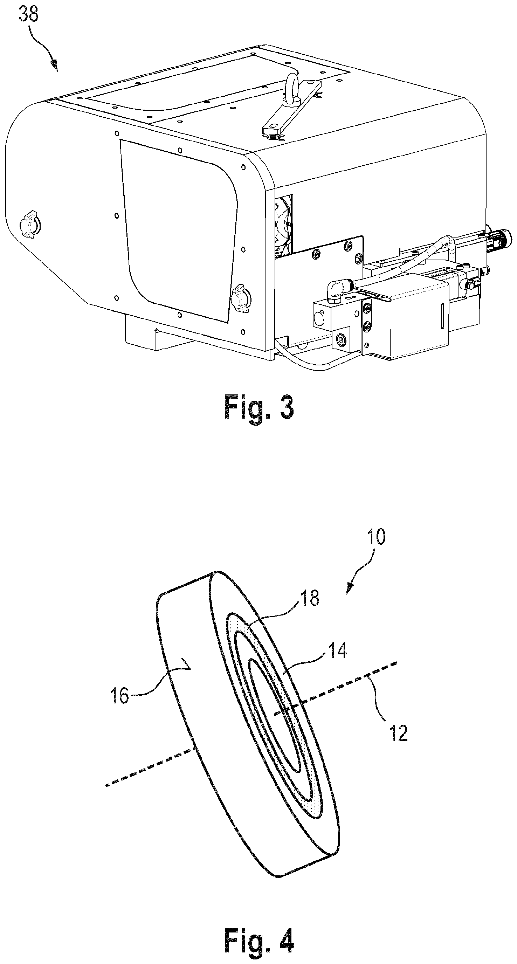

In Fig. 3 ist eine Vorrichtung 38 für das rotative Drahterodieren zur Verwendung in einer Schleifmaschine oder in einer anderen Werkzeugmaschine schematisch dargestellt. Die dargestellte Vorrichtung kann in eine Schleifmaschine integriert werden und erlaubt ein funkenerosives Abrichten in der Schleifmaschine. Durch ein Abrichten in der Schleifmaschine kann erreicht werden, dass Schleifscheibe zum Abrichten nicht aus der Schleifmaschine entnommen werden muss. Hierdurch wird ein Aus- und Einbauvorgang vermieden, durch den beispielsweise Ungenauigkeiten bezüglich des Rundlaufs entstehen können.

Für die Funkenerosion ist demnach, wie in Fig. 2 dargestellt, eine Stromzuführung 26 in die rotierende Schleifscheibe 10 erforderlich. Es ist erforderlich, dass starke, kurze Erosions-Elektroimpulse in eine schnell rotierende Schleifscheibe übertragen werden. Hierfür wird zumeist ein Schleifkontakt als Verbindungselement eingesetzt. Üblicherweise erfolgt die Energieübertragung über eine oder mehrere Drahtbürsten, die mit hochfestem Draht ausgeführt sind, und an die Scheibenstirnfläche gedrückt werden. Dieser Schleifkontakt ist üblicherweise mit Schleiföl gespült, gekühlt und geschmiert und erfordert, dass der Grundkörper der Schleifscheibe aus verschleißfestem Material besteht.

Herkömmlicherweise wird ein Stahlgrundkörper mit gesintertem metallgebundenem Schleifbelag verwendet. Allerdings bedingt die Verwendung eines Stahlgrundkörpers ein hohes Gewicht, insbesondere bei steigender Breite und bei steigendem Durchmesser der Schleifscheibe. Des Weiteren wird für das Beschleunigen und Abbremsen relativ viel Energie notwendig und die Dämpfung des Stahlkörpers ist gering. Daher sind diese Stahlgrundkörper bei extremen Geschwindigkeiten, beispielsweise über 140 m/sec, nicht mehr sinnvoll einsetzbar.

Als Alternative kommen Scheiben mit Leichtmetall-(Alu) oder faserverstärktem Kunststoff-Grundkörper (Carbon) zum Einsatz. In Anwendungen, die hohe Umlaufgeschwindigkeiten des Werkzeugs erfordern, kommen demnach bevorzugt leichtere Grundkörper zum Einsatz. Diese Grundkörper sind oft nichtmetallisch und weniger robust bzw. stabil gegenüber mechanischen Belastungen durch einen Schleifkontakt. Insbesondere für Lösungen, die sich auch für besonders hohe Scheibenumlaufgeschwindigkeiten eignen (beispielsweise über 140 m/sec), stellt die Energieübertragung in die schnell rotierende Schleifscheibe eine Herausforderung dar.

Die vorliegende Erfindung erlaubt es, dass auch bei solchen schnell rotierenden und leichten Scheiben eine Energieübertragung über einen Bürstenkontakt eingesetzt werden kann. Daher kann auch bei Carbon- oder Leichtmetallgrundkörpern eine Abrichtung der Schleifscheibe in der Schleifmaschine durchgeführt werden.

Fig. 4 zeigt schematisch eine erfindungsgemäße Schleifscheibe 10 in perspektivischer Ansicht. Die Schleifscheibe umfasst einen Grundkörper 14, der um eine Drehachse 12 rotieren kann, eine metallgebundene Werkzeugfläche 16 zum Materialabtrag und eine Funktionsfläche 18 zur Energieübertragung. Im dargestellten Ausführungsbeispiel ist die Funktionsfläche 18 als Ring ausgeführt. Es sind auch Ausführungen in anderer Form möglich.

Die erfindungsgemäße Funktionsfläche 18 kann beispielsweise durch eine Schraub- oder Klebeverbindung direkt auf dem Grundkörper 14 oder auf einem zusätzlich angebrachten Kontaktteil oder Einlegeteil angebracht sein kann. Alternativ kann auch eine Beschichtung direkt auf dem Grundkörper oder auf einem Kontakt- oder Einlegeteil verwendet werden. Die Funktionsfläche kann beispielsweise als Oberfläche eines dünnen Stahlblechrings ausgeführt sein. Die Funktionsfläche kann auch als Beschichtung ausgeführt sein. Hierfür kommen verschiedene Materialien in Betracht. Vorteilhafterweise wird Hartchrom, Hartgold, TiAIN, CrN (Balilit®), Beschichtungen aus dem Bereich Zerspanungswerkzeuge oder Diamond Like Carbon (DLC leitfähig eingestellt) verwendet.

Die Funktionsfläche ist zur Kontaktierung durch einen Bürsten- oder Schleifkontakt ausgelegt. Üblicherweise ist die Funktionsfläche so ausgeführt, dass sie gegenüber der Kontaktbürste hart ist, so dass die Bürste das Verschleißopfer darstellt. Bei der Wahl der Werkstoffe und der Oberfläche ist eine geringe Reibung von höchster Relevanz, so dass nur eine geringe Erwärmung entsteht. Im Öl im Schleifraum kann elektrochemische Korrosion entstehen. Demnach ist eine passende Auswahl von Bürsten- und Funktionsflächenmaterial erforderlich, so dass die Bürste das Verschleißopfer ist. Hierbei ist der Elektronegativitätswert der Werkstoffe entscheidend. Beispielsweise kann eine Kontaktbürste aus Edelstahl gefertigt sein.

Eine möglichst glatte Funktionsfläche erlaubt eine geringe Bürstenreibung und damit eine geringe Wärmeentwicklung. Die erfindungsgemäße Funktionsfläche weist üblicherweise eine Ebenheit von maximal. 0,02 mm auf. Möglicherweise kann eine Ebenheit durch ein nachträgliches Überschleifen hergestellt werden. Ein Blechring als Kontaktelement kann eine Dicke von 0,2 mm aufweisen. Für die Kontaktierung zwischen Funktionsfläche und Werkzeugfläche kann ein Leitkleber auf dem Grundkörper verwendet werden, der sich mit der Werkzeugfläche überlappt. Durch eine mikrostrukturierte Ausführung der Funktionsfläche kann die Entstehung von Reibwärme minimiert werden und die Neigung zum Aquaplaning reduziert werden.

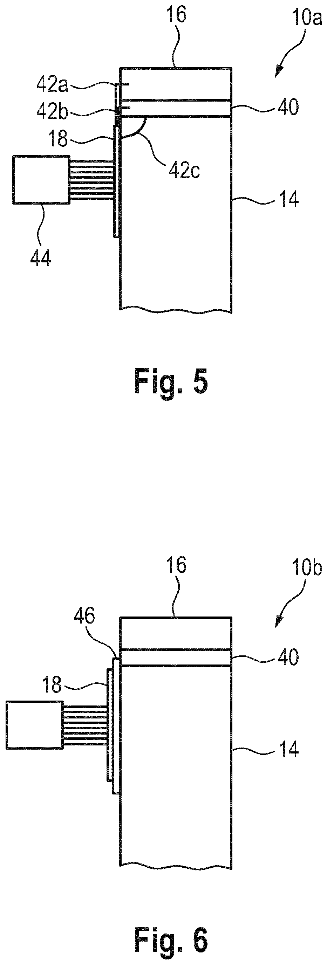

Die Figuren 5 bis 11 zeigen Ansichten verschiedener Ausführungsformen erfindungsgemäß ausgeführter Schleifscheiben 10 in einer frontalen Schnittansicht im Bereich einer elektrischen Kontaktierung an der Funktionsfläche durch einen Bürstenkontakt.

Die in Fig. 5 dargestellte erste erfindungsgemäße Ausführungsform 10a umfasst einen Grundkörper 14, eine metallgebundene Werkzeugfläche 16 und eine Funktionsfläche 18. In der dargestellten Ausführungsform ist die Werkzeugfläche durch eine Klebeverbindung 40 mit dem Grundkörper 14 verbunden ist. Die Funktionsfläche 18 ist in direktem Kontakt mit dem Grundkörper 14. Hierfür kommt beispielsweise eine Klebe-, Schraub- oder Schweißverbindung in Frage. Die Funktionsfläche ist zur Energieübertragung in Kontakt mit einem Bürstenkontakt 44. Einzelne Bürstendrähte schleifen über die Funktionsfläche 18 und erlauben eine Stromübertragung auf die rotierende Schleifscheibe 10a. Die Funktionsfläche 18 kann durch elektrisch leitenden Kleber mit der Werkzeugfläche 16 verbunden sein.

In Fig. 5 sind verschiedene mögliche Kontaktierungen zwischen Funktionsfläche 18 und Werkzeugfläche 16 dargestellt. Die Kontaktierung kann durch einen elektrischen Leiter 42a zwischen Funktionsfläche und Werkzeugfläche erreicht werden. Der Leiter kann beispielsweise entlang der Oberfläche des Grundkörpers geführt werden. Ebenfalls ist es möglich, dass ein elektrischer Leiter 42b die Funktionsfläche 18 mit einem elektrischen leitfähigen Kleber 40 verbindet. Der Kleber 40 kann dann den Strom in die Werkzeugfläche 16 einleiten. Ebenfalls kann ein elektrischer Leiter 42c vorgesehen sein, der durch den Grundkörper 14 in den Kleber 40 oder in die Werkzeugfläche 16 führt. Die Funktionsfläche 18 kann auch, im Falle einer Carbonscheibe, durch leitend ausgeführtes Matrixpolymer oder durch eine Ausnutzung der Leitfähigkeit von Carbonfasern elektrisch verbunden sein.

In Fig. 6 ist eine zweite Ausführungsform einer erfindungsgemäßen Schleifscheibe 10b dargestellt. Auf dem Grundkörper 14 ist zusätzlich ein Kontaktelement 46 vorgesehen. Dieses Kontaktelement 46 kann beispielsweise als dünner Metallring bzw. Blechring ausgebildet sein. Ebenfalls ist eine Ausbildung als Kreis möglich. Das Kontaktelement 46 dient als Basis der Funktionsfläche 18. Zudem kann das Kontaktelement 46 beispielsweise auch als elektrische Verbindung zur Werkzeugfläche 16 oder zu einer elektrisch leitfähigen Klebefläche 40 zwischen Grundkörper und Schleiffläche 16 ausgebildet sein. Die Funktionsfläche 18 kann auch der Oberfläche des Kontaktelements 46 entsprechen.

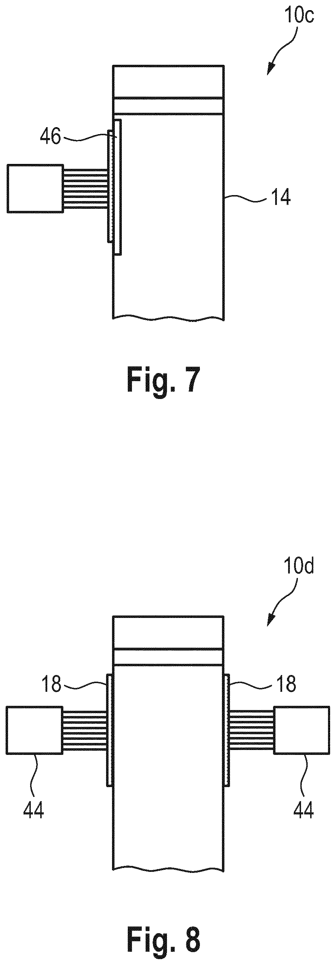

In Fig. 7 ist eine dritte Ausführungsform einer erfindungsgemäßen Schleifscheibe 10c dargestellt. Das Kontaktelement 46 ist als Einlegeteil zum Einlegen in eine entsprechend ausgeführte Aussparung 48 im Grundkörper 14 ausgeführt. Diese Aussparung 48 kann beispielsweise ringförmig auf einer axialen Stirnfläche der Schleifscheibe 10c ausgebildet sein, wie in Fig. 7 schematisch dargestellt.

Für den Fall, dass ein Kontaktelement, beispielsweise ein Metallblechring, verwendet wird, der beispielsweise in einen Carbongrundkörper eingelegt ist, kann dieser leitfähig verankert werden. Beispielsweise kann schon bei der Herstellung des Carbongrundkörpers eine entsprechende Aussparung vorgesehen werden, in die der Metallring eingelegt werden kann. Beispielsweise kann ein Blechring mit zwei Bolzen auf einer Seite einlaminiert sein.

Erfindungsgemäß kann die Funktionsfläche einseitig auf einer axialen Stirnfläche oder beidseitig auf beiden axialen Stirnflächen angebracht sein. In Fig. 8 ist eine vierte Ausführungsform einer erfindungsgemäßen Schleifscheibe 10d dargestellt, die auf beiden axialen Stirnflächen über eine Funktionsfläche 18 verfügt. Beidseitig sind Bürstenkontakte 44 vorgesehen, so dass beidseitig Energie zugeführt werden kann. Durch eine Wärmeentwicklung an der Kontaktstelle zwischen Bürste und Funktionsfläche kann sich die Scheibe verziehen. Um dies zu vermeiden, kann die Funktionsfläche an beiden axialen Stirnflächen der Schleifscheibe in Kontakt mit zwei Bürsten stehen. Hierdurch kommt es zu einem geringeren thermischen Verzug, da die Erwärmung gleichmäßig beidseitig hervorgerufen wird. Die beidseitige Ausführung der Funktionsfläche auf beiden Seiten einer Schleifscheibe hat demnach insbesondere den Vorteil, dass kein einseitiger thermischer Verzug entsteht, durch den eine Fertigungsungenauigkeit bei der Verwendung der Schleifscheibe erzeugt werden könnte.

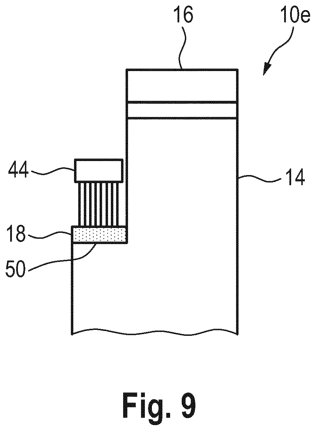

In Fig. 9 ist eine fünfte Ausführungsform einer erfindungsgemäßen Schleifscheibe 10e dargestellt. Die Funktionsfläche 18 kann ebenfalls auf einem Absatz auf dem Grundkörper radial angeordnet sein. Der Grundkörper 14 ist stufig, also mit einem Absatz 50, ausgeführt. Der Absatz verläuft ringförmig umlaufend entlang des Umfangs des Grundkörpers. Die Funktionsfläche 18 verläuft radial bezüglich der Drehachse auf dem Absatz 50. Der Bürstenkontakt 44 ist entsprechend zur Kontaktierung der Werkzeugfläche 16 über die Funktionsfläche 18 ausgebildet.

In einer erfindungsgemäßen Werkzeugmaschine kann die oben beschriebene Schleifscheibe eingesetzt werden. Die vorliegende Erfindung kann vorteilhafterweise insbesondere bei Schleifscheiben bzw. bei Schleifmaschinen eingesetzt werden. Allerdings können auch andere Werkzeuge bzw. Werkzeugmaschinen erfindungsgemäß ausgeführt sein.

Eine Werkzeugmaschine, in der ein erfindungsgemäßes Werkzeug verwendet werden kann, umfasst üblicherweise eine Vorrichtung, wie in Fig. 3 dargestellt, durch die die Werkzeugfläche des Werkzeugs mittels rotativen Drahterodierens abgerichtet werden kann. Insbesondere kann die Vorrichtung auf einer Seite der Werkzeugmaschine angeordnet sein, so dass das Werkzeug oder die Schleifscheibe zu der Vorrichtung gefahren werden kann. Die Kontaktierung zwischen Vorrichtung und Werkzeug bzw. Funktionsfläche des Werkzeugs zur Stromübertragung bei der Abrichtung des Werkzeugs erfolgt üblicherweise nur während des Abrichtvorgangs. Hierdurch wird eine übermäßige und unnötige Belastung des Materials vermieden. Als Verbindungselement kann insbesondere eine Kupferbürste verwendet werden. Vorteilhafterweise umfasst die Werkzeugmaschine zudem eine Vorrichtung, mit der die Kontaktstelle zwischen der Funktionsfläche des Werkzeugs und dem Verbindungselement, also die Kupferbürste, gespült werden kann.

Dadurch, dass ein erfindungsgemäßes Werkzeug bzw. eine erfindungsgemäße Schleifscheibe den Einsatz von Schleifscheiben mit vergleichsweise leichten Grundkörpern, beispielsweise aus Carbon oder Alu, erlaubt, können im Vergleich zu Schleifscheiben mit Stahlgrundkörpern höhere Umfangsgeschwindigkeiten, beispielsweise bis 250 m/sec oder bis 300 m/sec erreicht werden.

Es versteht sich, dass ein erfindungsgemäßes Werkzeug üblicherweise auch mit einer herkömmlichen Werkzeugmaschine verwendet werden kann.

Gegenüber herkömmlichen gekapselten Schleifringlösungen erlaubt das Werkzeug gemäß der vorliegenden Erfindung eine Hochfrequenz- und Hochstromübertragung. Beispielsweise kann ein geprüfter Gleichstrom mit bis zu 450 A pro Puls, mit Pulsfrequenzen bis 250 KHz, mit einem Entladespannungsimpuls bis zum 400 V und mit einer Dauerspannung bis 120 V erreicht werden.

Üblicherweise wird ein Schleifvorgang in einem verschmutzten Schleifraum ausgeführt. Es ist daher erforderlich, dass die Stromübertragung auch in voll offenen und nicht gekapselten Umgebungen funktioniert. Insbesondere sind Verschmutzungen durch Schleifschlamm als Mischung aus Schleiföl mit Partikeln beispielsweise aus Hartmetall, Stahl, Keramik, Bindungsresten wie Bronze oder Grafit, Schleifkornresten wie cBN oder Diamant, vorhanden. Die dabei vorkommenden Partikel oder Späne können bis zu 2 mm groß sein. Die Lösung der vorliegenden Erfindung erlaubt eine Anwendung auch unter Anwesenheit von Öl, insbesondere Schleiföl wie Mineral-, Hydrocrack-, PAO-Öl(Öl ist nichtleitend und kann als Dielektrikum wirken).

Die Kontaktfläche zwischen der Funktionsfläche der Schleifscheibe und einem Bürstenkontakt wird hierzu vorteilhafterweise direkt gespült, wobei eine Spülung eine bessere Stromübertragung erlaubt, jedoch nicht unbedingt erforderlich ist. Durch die Zusammenwirkung von Bürstenkontakt und Funktionsfläche wird Aquaplaning vermieden, so dass eine konstante Stromübertragung durch zumindest einen Bürstendraht sichergestellt wird. Üblicherweise wird nur dann ein Kontakt zwischen Metallbürste und Funktionsfläche hergestellt, wenn die Schleifscheibe abgerichtet wird. Hierdurch wird eine unnötige Materialermüdung verhindert. Die Vorrichtung ist demnach üblicherweise ortsfest in einer Schleifmaschine angeordnet. Für den Abrichtvorgang kann die Schleifscheibe an die Vorrichtung gefahren werden.

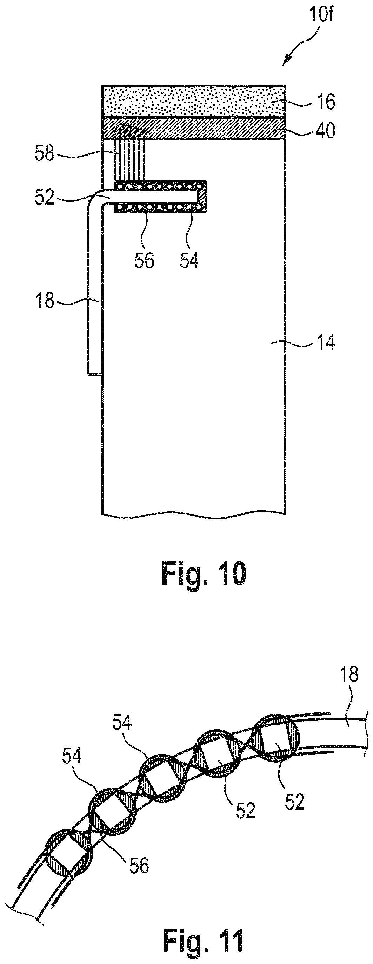

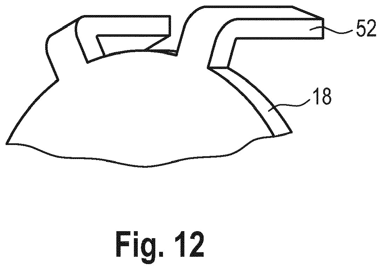

Die Figuren 10 bis 12 zeigen verschiedene Ansichten einer sechsten Ausführungsform einer erfindungsgemäßen Schleifscheibe 10f. Dabei zeigt Fig. 10 eine schematische Darstellung der Schleifscheibe im Querschnitt, Fig. 11 zeigt einen Querschnitt durch die Funktionsfläche und Fig. 12 zeigt eine perspektivische Darstellung eines Teils der Funktionsfläche.

Der Scheibengrundkörper 14 ist bei dieser Ausführungsform aus Carbon oder kohlenstofffaserverstärktem Kunststoff (CFK), vorzugsweise nur endlosfaser-verstärkt. Die elektrische Leitung durch den Scheibengrundkörper 14 erfolgt durch die Fasern selbst. Dabei sind die Fasern elektrisch leitend. Die Funktionsfläche 18 ist als Blechring oder Stahl, beispielsweise aus Material C45, gestaltet und ist vorzugsweise dicker als 1mm.

Der Blechring besitzt abgebogene Zinken, die ins Fasergelege des Scheibengrundkörpers 14 eingreifen. Die Zinken 52 können umlaufend oder nur abschnittsweise oder in bestimmten Gruppen, z.B. je 1-3 Zinken um 120° in Umfangsrichtung versetzt, angeordnet sein. Die Zinken 52 haben beispielsweise einen Querschnitt im Bereich von 1x1mm. Die Fasern 54 sind mittels Faserlegetechnik vor dem Imprägnieren mit Matrix-Kunststoff um die Zinken 52 (diese berührend) herumgelegt, womit die elektrische Leitung in die Fasern 54 hergestellt wird. Zur Verbesserung der Stromübertragung zwischen Zinken 52 und Fasern 54 kann vor dem Imprägnieren an den Zinken 52 speziell elektrisch leitender Kleber 56 zur Fixierung der Fasern 54 aufgetragen werden.

Um die Stromübertragung zum Sintermetall-Schleifbelag 16 zu erreichen, wird bei der Imprägnierung des Stapels aus Carbon-Fasergelege radial die Lage Fasern, die die Zinken 52 kontaktiert, so ausgestaltet, dass sie aus dem Imprägnierwerkzeug heraus schaut (mit 58 bezeichnet) und nicht mit dem Matrix-Kunststoff benetzt wird. Auf die "trockenen" radial herausstehenden Fasern 58 wird dann der Sintermetall-Schleifbelag 16 mittels elektrisch leitenden Klebers 40 als Ring oder segmentweise aufgeklebt.

In einer weiteren Ausgestaltung einer erfindungsgemäßen Schleifscheibe erfolgt die elektrische Leitung im aus Carbon oder CFK bestehenden Scheibengrundkörper durch zusätzlich eingelegte Metallfasern. Die Ausgestaltung der Schleifscheibe entspricht weitgehend der in Fig. 10 gezeigten Schleifscheibe 10f und der Blechring besitzt ebenfalls abgebogene Zinken, die ins Fasergelege des Scheibengrundkörpers eingreifen. Um die Zinken herum ist eine Metallfaser gelegt. Die Blechzinken können auch durchgestanzte Finger sein.

In einer weiteren Ausgestaltung einer erfindungsgemäßen Schleifscheibe erfolgt die elektrische Leitung an der Oberfläche des aus Carbon oder CFK bestehenden Scheibengrundkörpers. Der Scheibengrundkörper wird dabei an einer Seitenfläche und der radialen Mantelfläche an der Oberfläche metallisiert, z.B. mittels PVD-Verfahren (Gasphasenabscheidung). Ein Stahl-Blechring wird auf die metallisierte Seitenfläche bei der Klemmung der Scheibe im Scheibenflansch gedrückt oder mit elektrisch leitendem Kleber aufgeklebt. Der Sintermetall-Schleifbelag wird radial als Ring oder in Form von einzelnen Segmenten auf die metallisierte, elektrisch leitende Oberfläche aufgeklebt.

Auch wenn die Erfindung im Hinblick auf die Zeichnungen und die vorstehende Beschreibung im Detail dargestellt und beschrieben wurde, dient diese Darstellung und Beschreibung lediglich der Erläuterung anhand von Beispielen und ist nicht beschränkend zu verstehen. Die Erfindung ist nicht auf die offenbarten Ausführungsbeispiele, insbesondere nicht auf Schleifscheiben, beschränkt.

Andere Varianten der offenbarten Ausführungsbeispiele können vom Fachmann verstanden und im Rahmen der Erfindung ausgeführt werden, und zwar mithilfe eines Verständnisses der Zeichnungen, der Offenbarung und der angehängten Ansprüche. In den Ansprüchen sind die Wörter "mit" oder "aufweisend" nicht dahingehend zu verstehen, dass andere Elemente oder Schritte ausgeschlossen wären. Außerdem schließen die unbestimmten Artikel "ein", "eine" oder "eines" nicht eine Mehrzahl des entsprechenden Elements aus. Die Begriffe "links", "rechts", "oben", "unten" etc. werden lediglich für ein besseres Verständnis der Erfindung verwendet und beschränken nicht den Schutzbereich der Erfindung. Die alleinige Tatsache, dass bestimmte Merkmale in voneinander verschiedenen abhängigen Ansprüchen erwähnt sind, bedeutet nicht, dass nicht auch eine Kombination dieser Merkmale vorteilhaft sein könnte. Kein Bezugszeichen soll dahingehend verstanden werden, dass es eine Einschränkung des Schutzbereichs bedeutet.

## Patentansprüche

1. Werkzeug (10, 10a, 10b, 10c, 10d, 10e, 10f) zur zerspanenden Bearbeitung eines Werkstücks, mit:
- einem um eine Drehachse (12) rotierbaren Grundkörper (14) aus Carbon oder faserverstärktem Kunststoff;
- einer elektrisch leitfähigen Werkzeugfläche zum Materialabtrag am Werkstück; und
- einer Funktionsfläche (18), die mit der Werkzeugfläche elektrisch verbunden ist, zur elektrischen Kontaktierung der Werkzeugfläche während einer Drehung des Werkzeugs,
wobei die Funktionsfläche (18) bezüglich der Drehachse axial auf einer Stirnseite oder radial auf einem Absatz (50) des Grundkörpers (14) angeordnet ist,
**dadurch gekennzeichnet, dass** die Funktionsfläche (18) als Ring oder Scheibe ausgestaltet ist und Zinken (52) aufweist, die in den Grundkörper (14) eingreifen, und dass um die Zinken (52) Fasern (54) des faserverstärkten Kunststoffs des Grundkörpers (14) und/oder Metallfasern gewickelt sind und/oder auf den Zinken (52) elektrisch leitender Kleber aufgebracht ist.

2. Werkzeug (10, 10a, 10b, 10c, 10d, 10e, 10f) nach Anspruch 1, wobei die Funktionsfläche (18) ein widerstandsfähiges Material zur elektrischen Kontaktierung mit einem Bürstenkontakt (44) bei geringem Verschleiß umfasst; und wobei die Funktionsfläche zur Hochfrequenz- Hochstromübertragung für die elektroabrasive Materialbearbeitung, insbesondere zur Übertragung von elektrischen Pulsen mit einer Frequenz bis zu 250 KHz und einer Stromstärke bis zu 450 A, ausgebildet ist.

3. Werkzeug (10, 10a, 10b, 10c, 10d, 10e, 10f) nach einem der vorstehenden Ansprüche mit einem mit dem Grundkörper (14) verbundenen, insbesondere als Einlegeteil zum Einlegen in eine Aussparung (48) im Grundkörper (14) ausgebildeten Kontaktelement (46), wobei eine Oberfläche des Kontaktelements als Funktionsfläche (18) ausgebildet ist.

4. Werkzeug (10, 10a, 10b, 10c, 10d, 10e, 10f) nach Anspruch 3, wobei das Kontaktelement (46) als Stahlblech, insbesondere als kreis- oder ringförmiges Stahlblech ausgebildet ist; und/oder mit dem Grundkörper (14) durch eine Schraub-, Klebe- oder Schweißverbindung verbunden ist.

5. Werkzeug (10, 10a, 10b, 10c, 10d, 10e, 10f) nach Anspruch 1, wobei die um die Zinken (52) gewickelten Fasern (54, 56) des faserverstärkten Kunststoffs des Grundkörpers (14) durch den Grundkörper (14) führen und mit der Werkzeugfläche (16) elektrisch verbinden, insbesondere die Werkzeugfläche kontaktieren.

6. Werkzeug (10, 10a, 10b, 10c, 10d, 10e, 10f) nach Anspruch 1, ferner mit einer Metallisierungsschicht zwischen der Werkzeugfläche (16) und dem Grundkörper (14).

7. Werkzeug (10, 10a, 10b, 10c, 10d, 10e, 10f) nach Anspruch 1, wobei die Funktionsfläche (18) als Beschichtung mit einem verschleißfesten Material, insbesondere mit Hartchrom, Hartgold, Titanaluminiumnitrid, TiAIN, Chromnitrid, CrN oder leitfähig eingestelltem Diamond Like Carbon, DLC, ausgeführt ist.

8. Werkzeug (10, 10a, 10b, 10c, 10d, 10e, 10f) nach einem der vorstehenden Ansprüche, wobei die Funktionsfläche (18) bezüglich der Drehachse (12) axial auf zwei Stirnseiten des Grundkörpers (14) angeordnet ist.

9. Werkzeug (10, 10a, 10b, 10c, 10d, 10e, 10f) nach einem der vorstehenden Ansprüche, wobei die Funktionsfläche (18) eine Ebenheit von maximal 0,02 mm aufweist; und/oder als Ring ausgeführt ist.

10. Werkzeug (10, 10a, 10b, 10c, 10d, 10e, 10f) nach einem der vorstehenden Ansprüche, wobei die Funktionsfläche (18) und die Werkzeugfläche (16) durch einen elektrischen Leiter (42a, 42b, 42c) verbunden sind.

11. Werkzeug (10, 10a, 10b, 10c, 10d, 10e, 10f) nach einem der vorstehenden Ansprüche, wobei der Grundkörper (14) Carbon umfasst; und wobei die Funktionsfläche (18) und die Werkzeugfläche (16) durch Carbonfasern oder durch leitfähig ausgeführtes Matrix Polymer im Grundkörper elektrisch verbunden sind.

12. Werkzeug (10, 10a, 10b, 10c, 10d, 10e, 10f) nach einem der vorstehenden Ansprüche, wobei die Werkzeugfläche (16) als Ring oder in Form mehrerer Segmente ausgeführt ist und/oder auf den Grundkörper (14) aufgeklebt ist.

13. Werkzeugmaschine mit:
- einem Werkzeug (10, 10a, 10b, 10c, 10d, 10e, 10f) nach einem der Ansprüche 1 bis 12 zur zerspanenden Bearbeitung eines Werkstücks mittels des Werkzeugs, und
- einer Vorrichtung (38) zum rotativen Drahterodieren der elektrisch leitfähigen Werkzeugfläche (16) des Werkzeugs zum Abrichten des Werkzeugs,
wobei die Vorrichtung (38) ein Verbindungselement zur elektrischen Kontaktierung der Werkzeugfläche (16) des Werkzeugs über die Funktionsfläche (18) des Werkzeugs zur Stromübertragung während des Abrichtens des Werkzeugs umfasst.

14. Werkzeugmaschine nach Anspruch 13, wobei das Verbindungselement als Bürste, insbesondere als Stahl- oder Kupferbürste, zur schleifenden Kontaktierung der Funktionsfläche (18) während des Abrichtens des Werkzeugs ausgeführt ist.

15. Werkzeugmaschine nach Anspruch 13 oder 14 mit einer Spülvorrichtung zum Spülen der Kontaktstelle zwischen der Funktionsfläche (18) des Werkzeugs und dem Verbindungselement der Vorrichtung (38).

## Claims

1. Tool (10, 10a, 10b, 10c, 10d, 10e, 10f) for machining a workpiece, having:
- a base body (14) made of carbon or fibre-reinforced plastic which can be rotated about an axis of rotation (12);
- an electrically conductive tool surface for removing material from the workpiece; and
- a functional surface (18), which is electrically connected to the tool surface, for electrically contacting the tool surface during a rotation of the tool,
wherein the functional surface (18) is arranged with respect to the axis of rotation axially on an end face or radially on a shoulder (50) of the base body (14),
**characterised in that** the functional surface (18) is configured as a ring or disc and has prongs (52) which engage in the base body (14), and **in that** fibres (54) of the fibre-reinforced plastic of the base body (14) and/or metal fibres are wound around the prongs (52) and/or electrically conductive adhesive is applied to the prongs (52).

2. Tool (10, 10a, 10b, 10c, 10d, 10e, 10f) according to claim 1, wherein the functional surface (18) comprises a resistant material for electrical contacting with a brush contact (44) at low wear; and wherein the functional surface is configured for highfrequency high-current transmission for electroabrasive material processing, in particular for the transmission of electrical pulses with a frequency of up to 250 KHz and a current intensity of up to 450 A.

3. Tool (10, 10a, 10b, 10c, 10d, 10e, 10f) according to one of the preceding claims, having a contact element (46) which is connected to the base body (14) and is in particular configured as an insertion part for insertion into a recess (48) in the base body (14), one surface of the contact element being configured as a functional surface (18).

4. Tool (10, 10a, 10b, 10c, 10d, 10e, 10f) according to claim 3, wherein the contact element (46) is formed as a steel sheet, in particular as a circular or annular steel sheet; and/or is connected to the base body (14) by a screw, adhesive or welded connection.

5. Tool (10, 10a, 10b, 10c, 10d, 10e, 10f) according to claim 1, wherein the fibres (54, 56) of the fibre-reinforced plastic of the base body (14) wound around the prongs (52) pass through the base body (14) and electrically connect with the tool surface (16), in particular contact the tool surface.

6. Tool (10, 10a, 10b, 10c, 10d, 10e, 10f) according to claim 1, further comprising a metallisation layer between the tool surface (16) and the base body (14).

7. Tool (10, 10a, 10b, 10c, 10d, 10e, 10f) according to claim 1, wherein the functional surface (18) is configured as a coating with a wear-resistant material, in particular with hard chrome, hard gold, titanium aluminium nitride, TiAIN, chromium nitride, CrN or conductively adjusted Diamond Like Carbon, DLC.

8. Tool (10, 10a, 10b, 10c, 10d, 10e, 10f) according to one of the preceding claims, wherein the functional surface (18) is arranged with respect to the axis of rotation (12) axially on two end faces of the base body (14).

9. Tool (10, 10a, 10b, 10c, 10d, 10e, 10f) according to one of the preceding claims, wherein the functional surface (18) has a flatness of at most 0.02 mm; and/or is configured as a ring.

10. Tool (10, 10a, 10b, 10c, 10d, 10e, 10f) according to one of the preceding claims, wherein the functional surface (18) and the tool surface (16) are connected by an electrical conductor (42a, 42b, 42c).

11. Tool (10, 10a, 10b, 10c, 10d, 10e, 10f) according to one of the preceding claims, wherein the base body (14) comprises carbon; and wherein the functional surface (18) and the tool surface (16) are electrically connected by carbon fibres or by conductive matrix polymer in the base body.

12. Tool (10, 10a, 10b, 10c, 10d, 10e, 10f) according to one of the preceding claims, wherein the tool surface (16) is configured as a ring or in the form of several segments and/or is glued onto the base body (14).

13. Machine tool comprising:
- a tool (10, 10a, 10b, 10c, 10d, 10e, 10f) according to any one of claims 1 to 12 for machining a workpiece by means of the tool, and
- a device (38) for rotational wire eroding the electrically conductive tool surface (16) of the tool for dressing the tool,
wherein the device (38) comprises a connecting element for electrically contacting the tool surface (16) of the tool via the functional surface (18) of the tool for current transmission during dressing of the tool.

14. Machine tool according to claim 13, wherein the connecting element is configured as a brush, in particular as a steel or copper brush, for abrasive contacting of the functional surface (18) during dressing of the tool.

15. Machine tool according to claim 13 or 14 having a flushing device for flushing the contact point between the functional surface (18) of the tool and the connecting element of the device (38).

## Revendications

1. Outil (10, 10a, 10b, 10c, 10d, 10e, 10f) destiné à usiner une pièce par enlèvement de copeaux, qui comprend :
- un corps de base (14), en carbone ou en matière plastique renforcée par des fibres, qui est apte à tourner autour d'un axe de rotation (12) ;
- une surface d'outil électriquement conductrice destinée à enlever de la matière sur la pièce ; et
- une surface fonctionnelle (18) qui est reliée électriquement à la surface d'outil pour venir en contact électrique avec la surface d'outil pendant une rotation de l'outil,
la surface fonctionnelle (18) étant agencée, par rapport à l'axe de rotation, axialement sur un côté frontal ou radialement sur un épaulement (50) du corps de base (14),
**caractérisé en ce que** la surface fonctionnelle (18) est conçue sous la forme d'un anneau ou d'un disque et comprend des dents (52), qui pénètrent dans le corps de base (14), et
**en ce que** des fibres (54) de la matière plastique renforcée par des fibres du corps de base (14) et/ou des fibres métalliques sont enroulées autour des dents (52) et/ou un adhésif électriquement conducteur est appliqué sur les dents (52).

2. Outil (10, 10a, 10b, 10c, 10d, 10e, 10f) selon la revendication 1, dans lequel la surface fonctionnelle (18) comporte un matériau robuste pour venir en contact électrique avec un contact de brosse (44) avec une faible usure ; et dans lequel la surface fonctionnelle est configurée pour la transmission de fréquence élevée et de courant élevé pour l'usinage électro-abrasif de matériaux, notamment pour la transmission d'impulsions électriques ayant une fréquence de jusqu'à 250 KHz et une intensité de courant de jusqu'à 450 A.

3. Outil (10, 10a, 10b, 10c, 10d, 10e, 10f) selon l'une quelconque des revendications précédentes, comprenant un élément de contact (46) relié au corps de base (14), notamment configuré sous la forme d'une partie d'insertion destinée à être insérée dans un évidement (48) dans le corps de base (14), une surface de l'élément de contact étant configu-rée en tant que surface fonctionnelle (18).

4. Outil (10, 10a, 10b, 10c, 10d, 10e, 10f) selon la revendication 3, dans lequel l'élément de contact (46) est configuré sous la forme d'une tôle en acier, notamment sous la forme d'une tôle en acier circulaire ou annulaire ; et/ou est relié au corps de base (14) par une liaison par vissage, collage ou soudage.

5. Outil (10, 10a, 10b, 10c, 10d, 10e, 10f) selon la revendication 1, dans lequel les fibres (54, 56), enroulées autour des dents (52), de la matière plastique renforcée par des fibres du corps de base (14) traversent le corps de base (14) et se relient électriquement à la surface d'outil (16), notamment viennent en contact avec la surface d'outil.

6. Outil (10, 10a, 10b, 10c, 10d, 10e, 10f) selon la revendication 1, comprenant en outre une couche de métallisation entre la surface d'outil (16) et le corps de base (14).

7. Outil (10, 10a, 10b, 10c, 10d, 10e, 10f) selon la revendication 1, dans lequel la surface fonctionnelle (18) est réalisée en tant que revêtement comprenant un matériau résistant à l'usure, notamment comprenant du chrome dur, de l'or dur, du nitrure de titane et d'aluminium, du TiAIN, du nitrure de chrome, du CrN ou du carbone de type diamant, DLC, ajusté pour être conducteur.

8. Outil (10, 10a, 10b, 10c, 10d, 10e, 10f) selon l'une quelconque des revendications précédentes, dans lequel la surface fonctionnelle (18) est agencée axialement sur deux côtés frontaux du corps de base (14), par rapport à l'axe de rotation (12).

9. Outil (10, 10a, 10b, 10c, 10d, 10e, 10f) selon l'une quelconque des revendications précédentes, dans lequel la surface fonctionnelle (18) présente une planéité d'au plus 0,02 mm ; et/ou est réalisée sous la forme d'un anneau.

10. Outil (10, 10a, 10b, 10c, 10d, 10e, 10f) selon l'une quelconque des revendications précédentes, dans lequel la surface fonctionnelle (18) et la surface d'outil (16) sont reliées par un conducteur électrique (42a, 42b, 42c).

11. Outil (10, 10a, 10b, 10c, 10d, 10e, 10f) selon l'une quelconque des revendications précédentes, dans lequel le corps de base (14) comporte du carbone ; et dans lequel la sur-face fonctionnelle (18) et la surface d'outil (16) sont reliées électriquement par des fibres de carbone ou par du polymère de matrice réalisé sous forme conductrice dans le corps de base.

12. Outil (10, 10a, 10b, 10c, 10d, 10e, 10f) selon l'une quelconque des revendications précédentes, dans lequel la surface d'outil (16) est réalisée sous la forme d'un anneau ou sous la forme de plusieurs segments et/ou est collée sur le corps de base (14).

13. Machine à outil comprenant :
- un outil (10, 10a, 10b, 10c, 10d, 10e, 10f) selon l'une quelconque des revendica-tions 1 à 12 destiné à usiner une pièce par enlèvement de copeaux au moyen de l'outil, et
- un dispositif (38) destiné à l'érosion rotative à fil de la surface d'outil électrique-ment conductrice (16) de l'outil afin de dresser l'outil,
le dispositif (38) comportant un élément de liaison destiné à venir en contact électrique avec la surface d'outil (16) de l'outil par l'intermédiaire de la surface fonctionnelle (18) de l'outil pour la transmission de courant pendant le dressage de l'outil.

14. Machine à outil selon la revendication 13, dans laquelle l'élément de liaison est réalisé sous la forme d'une brosse, notamment d'une brosse en acier ou en cuivre, destinée à venir en contact frottant avec la surface fonctionnelle (18) pendant le dressage de l'outil.

15. Machine à outil selon la revendication 13 ou 14, comprenant un dispositif de rinçage destiné à rincer l'emplacement de contact entre la surface fonctionnelle (18) de l'outil et l'élément de liaison du dispositif (38).
